# EUROPEAN PATENT SPECIFICATION

(11) **EP 2 093 136 B1**
(45) Date of publication and mention of the grant of the patent: **28.07.2010**
(21) Application number: 08021100.6
(22) Date of filing: 04.12.2008
(51) Int. Cl.: B62J 27/00, B62J 35/00

(54) **Motorcycle**
Motorrad
Motocyclette

(30) Priority: 19.02.2008 JP 2008037485
(43) Date of publication of application: 26.08.2009
(73) Proprietor: Honda Motor Co., Ltd., Minato-ku Tokyo 107-8556 (JP)
(72) Inventor: Misaki, Kenichi, Wako-shi Saitama 351-0193 (JP); Kuroki, Kazuyoshi, Wako-shi Saitama 351-0193 (JP); Kuroe, Takeshi, Wako-shi Saitama 351-0193 (JP)
(74) Representative: Liska, Horst

(56) References cited:
- DE-U1- 9 310 544
- JP-A- 9 328 087
- JP-A- 2004 136 790
- US-A1- 2003 189 323

## Description

### Technical Field

The present invention relates to a motorcycle having an air bag module on the front side of a rider seat according to the preamble of claim 1.

### Background Art

A motorcycle according to the preamble of claim 1 is known from JP 2004-136790 A.

JP 9-328087 A discloses a motorcycle in which an air bag module including an air bag is supported via a moving frame to left and right guide frames for guiding the moving frame.

DE 93 10 544 U1 discloses a safety system at a motorcycle with a fuel tank from plastic, which fuel tank is provided at its upper side with a recess housing an air bag.

US 2003/189,323 A1 discloses an air bag for a small-sized vehicle in which an air bag module is accommodated in an accommodation recess provided at a rear portion of a dummy tank carried at a front half portion of a body frame of the small-sized vehicle and formed in a shape the same as that of a conventional fuel tank.

A further motorcycle with an air bag module provided on the front side of a rider seat on which to seat the rider(s) has been known (refer to, for example, Patent Document No. JP-A-2007-69793).

In FIG. 7 of Patent Document No. JP-A-2007-69793, the motorcycle is provided with an air bag module 20 (the reference symbols used in the patent document are used here and hereinafter) incorporating an air bag, a fuel tank 30 is disposed on the rear side of the air bag module 20, and a main seat 10 on which to seat the rider(s) is disposed on the rear side of the fuel tank 30.

The air bag and belt stays 52 provided on the vehicle body side are connected by support belts 51 for holding the inflated air bag in a predetermined position upon inflation of the air bag.

Meanwhile, in the technology according to Patent Document No. JP-A-2007-69793, the fuel tank 30 is disposed between the air bag module 20 and the main seat 10, and the support belts 51 for holding the air bag in a predetermined position after inflation of the air bag are provided. A technology substituting for the support belts, if any, is preferable.

### Problems to be Solved by the Invention

It is an object of the present invention to provide a motorcycle having a technology which substitutes for the support belts for holding an air bag in the position where it is inflated.

### Means for Solving the Problems

The invention according to claim 1 resides in a motorcycle including a head pipe, main frames extending toward the rear left and right sides from the head pipe, a fuel tank provided between the left and right main frames, seat frames extending rearwards from rear end parts of the main frames, a rider seat which is supported by the seat frames and on which a rider or riders can sit, and an air bag module provided on the front side of the rider seat, wherein the air bag module is disposed on the upper side of a rear part of the fuel tank and wherein the seat frames are provided respectively on the left and right sides, which motorcycle is characterized in that the air bag module is mounted to left and right stay members extending upwards from the left and right main frames, and is mounted bridgingly between the left and right stay members, wherein a fuel sub-tank is disposed between the left and right seat frames as viewed from the upper side of the vehicle, the fuel sub-tank is provided with a fuel pump for feeding out a fuel to the engine side, the fuel tank and the fuel sub-tank are connected to each other with a pipe through which the fuel can pass, and the fuel pump is configured to supply fuel from the fuel sub-tank to the engine.

The invention according to claim 2 is characterized in that a rear part upper surface of the fuel tank is provided with a recess, and the air bag module is disposed in the recess.

The invention according to claim 3 is characterized in that the fuel tank, the air bag module, and the stay members are covered collectively with a tank cover.

The invention according to claim 4 is characterized in that the tank cover is provided, at its portion facing the air bag module, with a fragile part inclusive of a notch part.

### Effects of the Invention

In the invention according to claim 1, the air bag module is disposed on the upper side of a rear part of the fuel tank. Therefore, the air bag module can be disposed closer to the rider, as compared with the case where the air bag module is disposed on the front side of the fuel tank. With the air bag module disposed closer to the rider, the air bag can be inflated in a predetermined position, without using any support belt that is connected between the vehicle body and the air bag so as to hold the air bag in the predetermined position upon inflation of the air bag.

Moreover, the seat frames are provided respectively on the left and right sides, and a fuel sub-tank is disposed between the left and right seat frames as viewed from the upper side of the vehicle. Therefore, the reduction in the capacity for fuel due to provision of the recess in the fuel tank can be compensated for by the fuel sub-tank. In addition, with the fuel sub-tank and a fuel supply system disposed close to the engine, both a lowering in the center of gravity of the vehicle and concentration of mass can be promised. With both the lowering of the center of gravity and concentration of mass realized, the driveability of the vehicle can be enhanced further.

In the invention according to claim 2, a rear part upper surface of the fuel tank is provided with a recess, and the air bag module is disposed in the recess. Therefore, the air bag module can be disposed so as not to project from the upper surface of the fuel tank. When the air bag module can be disposed so as not to project from the upper surface of the fuel tank, ruggedness in the upper surface of the fuel tank can be suppressed, the upper surface of the fuel tank can be kept neat, and the appearance quality of the fuel tank and the surroundings can be prevented from being lowered.

In addition, with the air bag module disposed in the recess formed in the rear part upper surface of the fuel tank, the air bag at the time of inflation is inflated toward the rider's side, and the air bag can be efficiently inflated without using any support belt.

In the invention according to claim 3, the fuel tank, the air bag module, and the stay members are collectively covered with a tank cover. Therefore, the appearance quality of the fuel tank and the surroundings can be largely enhanced, while permitting the air bag module to be disposed in the vicinity of the rider.

In the invention according to claim 4, the tank cover is provided, at its portion facing the air bag module, with a fragile part inclusive of a notch part. When in a non-operating state, the air bag module is covered with the tank cover, so that the appearance quality of the vehicle can be maintained. When the air bag module is operated, an opening is formed along the fragile part due to the expansion of the air bag, so that the air bag can be put into expansion and inflation smoothly.

In claim 1, the recess which is formed in the upper surface of the fuel tank and in which to dispose the air bag module may not necessarily be limited to a rear part of the fuel tank but may be at a front part or an intermediate part of the fuel tank.

In claim 2, the tank, the air bag module and the stay members may not necessarily be entirely covered with the tank cover. Of these members, only part of the members or only a partial region may be covered.

In claim 3, the fragile part may be of any arbitrary structure that permits the air bag to be put into expansion and inflation smoothly at a predetermined time; for example, a notch, a thinned part or, further; a hinge structure may be adopted.

### Industrial Applicability

The present invention is preferably applicable to a motorcycle provided with an air bag module.

### Brief Description of the Drawings

FIG. 1 is a left side view of a motorcycle according to the present invention.
FIG. 2 is a perspective view of a cowl stay provided in the motorcycle according to the present invention.
FIG. 3 is a side view of a right front part of the motorcycle according to the present invention.
FIG. 4 is a side view of an air bag module disposed on the upper side of a rear part of a fuel tank and the surroundings of the same.
FIG. 5 is a perspective view of the air bag module disposed on the upper side of the rear part of the fuel tank and the surroundings of the same.
(a) and (b) of FIG. 6 illustrate the operation of the cowl stay.
(a), (b) and (c) of FIG. 7 illustrate the operation of the air bag module.
(a) and (b) of FIG. 8 are respectively an illustration of the operation of the air bag module mounted to the motorcycle according to the present invention and an illustration of a comparative example.

### Best Mode for Carrying Out the Invention

A best mode for carrying out the present invention will be described below, based on the accompanying drawings. Incidentally, the drawings are to be viewed according to the attitude of reference symbols.

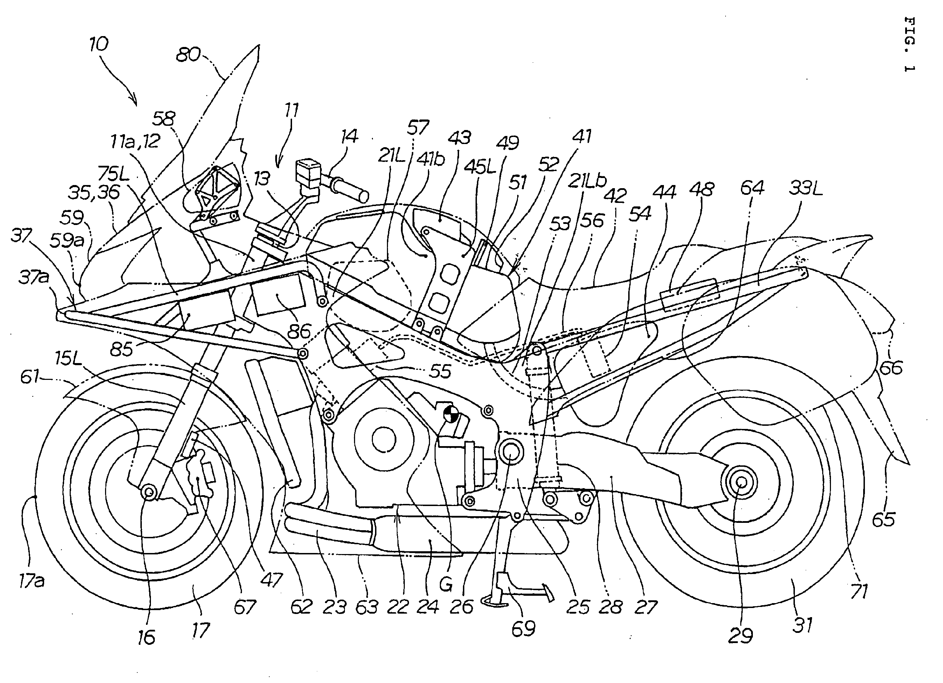

FIG. 1 is a left side view of a motorcycle according to the present invention. The motorcycle 10 includes, as main components: a head pipe 12 provided at a front end part 11 a of a body frame 11; a steering handle 14 turnably provided at the head pipe 12 through a steering shaft 13; left and right front forks 15L, 15R (only 15L on the viewer's side of the drawing is shown, here and hereinafter) connected to the steering shaft 13 and having a cushion function for absorbing vibrations and the like that the vehicle receives from the road surface; a front wheel 17 turnably mounted to a front wheel axle 16 bridgingly arranged between lower end parts of the front forks 15L, 15R; main frames 21L, 21R (only 21L on the viewer's side of the drawing is shown) extended toward the rear left and right sides from the head pipe 12; an engine 22 suspended from the main frames 21L, 21R; an exhaust pipe 23 extended from the engine 22; a muffler 24 connected to the exhaust pipe 23; a pivot part 25 provided at rear lower parts of the main frames 21L, 21R, and a pivot shaft 26 provided at the pivot part 25; a rear swing arm 27 extended rearwards from the pivot shaft 26 and incorporating power transmission means therein; a rear cushion unit 28 provided between the rear swing arm 27 and the main frames 21L, 21R and supporting the rear swing arm 27 so as to permit the latter to swing about the pivot shaft 26; a rear wheel axle 29 provided at a rear end part of the rear swing arm 27; a rear wheel 31 as a drive wheel which is turnably mounted to the rear wheel axle 29; and seat frames 33L, 33R (only 33L on the viewer's side of the drawing is shown) extended toward the rear upper side from rear end parts of the main frames 21L, 21R.

The layout of component parts pertaining to an upper part of the motorcycle will be described below.

The motorcycle 10 includes: the main frames 21L, 21R extended toward the rear left and right sides from the head pipe 12; a fuel tank 41 provided between the left and right main frames 21L, 21R; the seat frames 33L, 33R extended rearwards from rear end parts 21Lb, 21Rb (only 21Lb on the viewer's side of the drawing is shown) of the main frames 21L, 21R; a rider seat 42 supported by the seat frame 33L, 33R so as to seat the rider(s) thereon; and an air bag module 43 provided on the front side of the rider seat 42.

The air bag module 43 is disposed on the upper side of a rear part 41b of the fuel tank 41, and is attached to stay members 45L, 45R (only 45L on the viewer's side of the drawing is shown) extended upwards from the left and right main frames 21L, 21R.

In the air bag module 43, an air bag which will be described later is contained in a folded state. In order to inflate the air bag at a predetermined time, a shock sensor 47 for detecting a shock exerted on the motorcycle 10 upon collision of the motorcycle 10 serving as a vehicle is disposed on the front fork 15L, and an air bag control unit 48 for controlling the inflation time of the air bag on the basis of a signal obtained through detection by the shock sensor 47 or the like is disposed at a lower rear part in relation to the rider seat 42. The air bag module 43, the shock sensor 47 and the air bag control unit 48 are connected together with a harness (not shown).

A space 51 capable of containing small things such as a wallet and an ETC unit 49 therein is provided on the upper side of a rear part of the fuel tank 41 and on the rear side of the air bag module 43, and a small-thing container 52 utilizing this space is provided, thereby enhancing the utility for the rider(s).

A fuel supply system will now be described. A fuel sub-tank 44 is disposed on the rear lower side of the fuel tank 41 and on the lower side of the rider seat 42, between the left and right seat frames 33L, 33R as viewed from the upper side of the vehicle. A fuel pump 54 for feeding out a fuel to the engine 22 side is provided on the inside of the fuel sub-tank 44. The fuel tank 41 and the fuel sub-tank 44 are connected to each other by a pipe 53 for passing the fuel. The fuel pump 54 is connected through a fuel hose 56 to a fuel supply system 55 which is provided at an intake part of the engine 22 and which supplies a fuel-air mixture.

According to the above configuration, the fuel in the fuel tank 41 is fed into the fuel sub-tank 44, is fed through the fuel pump 54 and the fuel hose 56, and is supplied to the engine 22 through the fuel supply system 55 provided in the vicinity of the engine 22.

In the figure, symbol 57 denotes an air cleaner which is so disposed as to partly overlap with the fuel tank 41 in side view and which supplies filtered air to the fuel supply system 55, symbol 58 denotes a side mirror attached to the front cowl 36 for the rider to look rearwards, 59 denotes a head light, 61 denotes a front fender, 62 denotes a radiator unit, 63 denotes a main cowl, 64 denotes a rear cowl, 65 denotes a rear fender, 66 denotes a tail lamp, 67 denotes a front disk brake unit, 69 denotes a main stand, 71 denotes a side trunk attached to the seat frame 33L so as to store luggage therein.

Now, a cowl stay 37 provided at a front part of the vehicle will be described below.

The motorcycle 10 is provided with the cowl stay 37 which is extended toward the front side of the left and right main frames 21L, 21R and which supports the front cowl 36 serving as a cowling 35 covering the vehicle.

The cowl stay 37 is so disposed that, in side view of the vehicle, a front end part 37a thereof is located on the rear side relative to a front end part 17a of the front wheel 17 and on the front side relative to a front end part 59a of the head light 59 provided on the front side of the head pipe 12 so as to illuminate the front side of the vehicle. In the figure, symbol G denotes the center-of-gravity position of the vehicle. The cowl stay 37 is disposed above the center-of-gravity position G of the vehicle. The detailed structure of the cowl stay 37 will be described later.

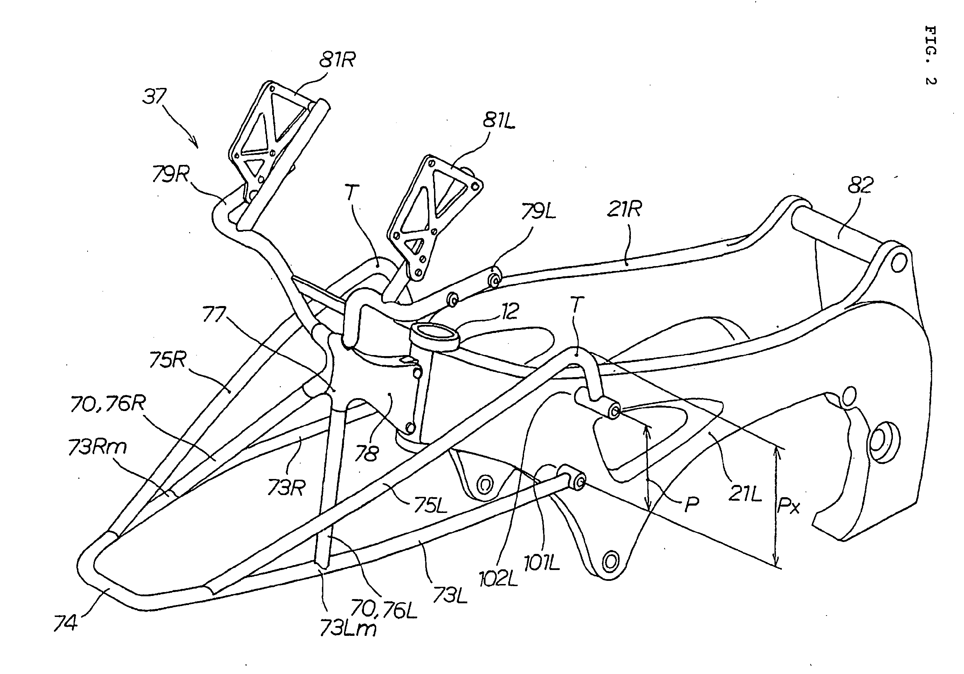

FIG. 2 is a perspective view of the cowl stay provided in the motorcycle according to the present invention. The cowl stay 37 includes: left and right main stay parts 73L, 73R extending substantially horizontally in a forward direction from the main frames 21L, 21R; a cross part 74 connecting the front ends of the main stay parts 73L, 73R to each other; left and right slant members 75L, 75R as members for respectively connecting intermediate parts 73Lm, 73Rm of the main stay parts 73L, 73R to the main frames 21L, 21R to thereby reinforce the main stay parts 73L, 73R; lower arm parts 76L, 76R as arm parts 70 extended toward the inner upper side from the left and right main stay parts 73L, 73R; a connection part 77 connecting the upper ends of the lower arm parts 76L, 76R to each other; a center arm 78 extended from a front part of the head pipe 12 to the connection part 77 so as to support the connection part 77; upper arm parts 79L, 79R extended toward the left and right sides from the connection part 77; and left and right cowl brackets 81L, 81R which are provided at tip parts of the upper arm parts 79L, 79R and to which a front cowl (denoted by symbol 36 in the drawings). Thus, the cowl stay 37 is mounted to the main frames 21L, 21R and the head pipe 12. In the figure, symbol 82 denotes a cross member.

Here, the points 101L, 101R (only symbol 101L on the viewer's side of the drawing is shown) at which the main stay parts 73L, 73R are mounted to the main frames 21L, 21R and the points 102L, 102R (only symbol 102L on the viewer's side of the drawing is shown) at which the slant members 75L, 75R are mounted to the main frames 21L, 21R are different points, and the points 102L, 102R and the points 101L, 101R are spaced from each other by a spacing P in the vehicle height direction.

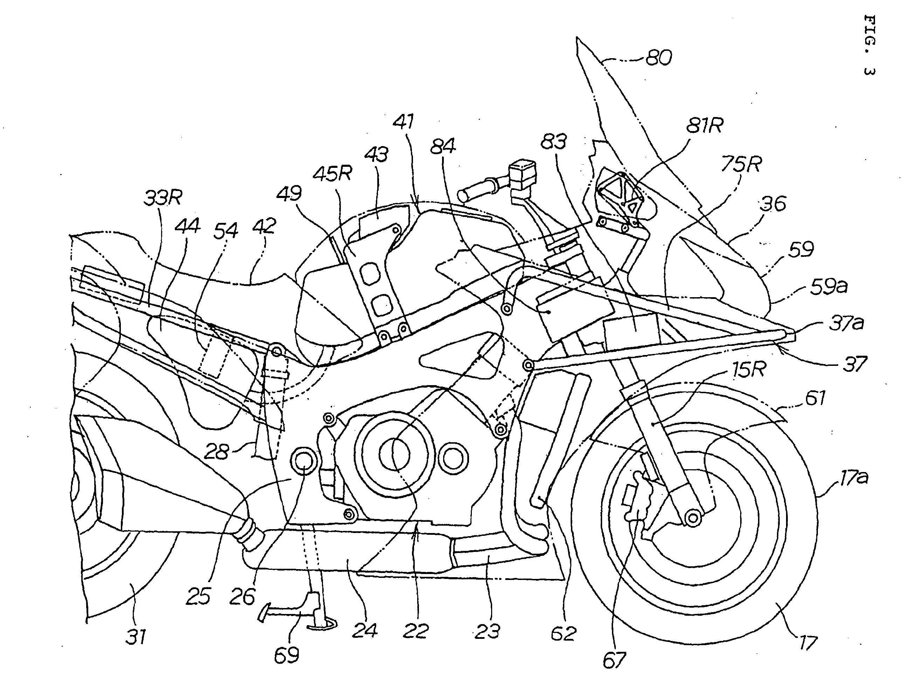

FIG. 3 is a side view of a right front part of the motorcycle according to the present invention. In the cowl stay 37, a regulator 83 and a battery 84 are mounted to the right-side slant member 75R in this order from the front side toward the rear side.

Referring to FIGS. 1 to 3, the cowl stay 37 is mounted to the main frames 21L, 21 R, so that the mounting strength of the cowl stay 37 can be enhanced largely, as compared to the case where the cowl stay 37 is mounted only to the head pipe 12.

The front cowl 36 formed as one body with a shield 80 covering the front side of the rider is attached to the cowl brackets 81L, 81R, and the head light 59 is attached thereto through a bracket (not shown). An engine control unit 85 and an ABS control unit 86 on the rear side of the engine control unit 85 are mounted to the left-side slant member 75L of the cowl stay 37, in this order from the front side toward the rear side. As above-mentioned, the regulator 83 and the battery 84 are mounted to the right-side slant member 75R of the cowl stay 37, in this order from the front side toward the rear side. Consequently, a good center-of-gravity balance between the left and right parts of the motorcycle 10 can be secured. Incidentally, since the cowl stay 37 is covered with the front cowl 36, the appearance quality of the vehicle can be kept good.

The cowl stay 37 includes the cross member 74 connecting the front ends of the main stay parts 73L, 73R to each other, and the left and right slant members 75L, 75R for connecting the intermediate parts 73Lm, 73Rm of the main stay parts 73L, 73R to the main frames 21L, 21R. Therefore, the strength of the cowl stay 37 can be enhanced, as compared with the case where only the main stay parts 73L, 73R are provided to constitute the cowl stay 37.

In addition, by utilizing the main stay parts 73L, 73R and the slant members 75L, 75R, it is possible, for example, to mount the regulator, the battery and the control units to the slant members 75L, 75R or the like. Since various component parts can be mounted to the main stay parts 73L, 73R and the slant members 75L, 75R, the degree of freedom in layout of the component parts in a front part of the vehicle can be enhanced largely.

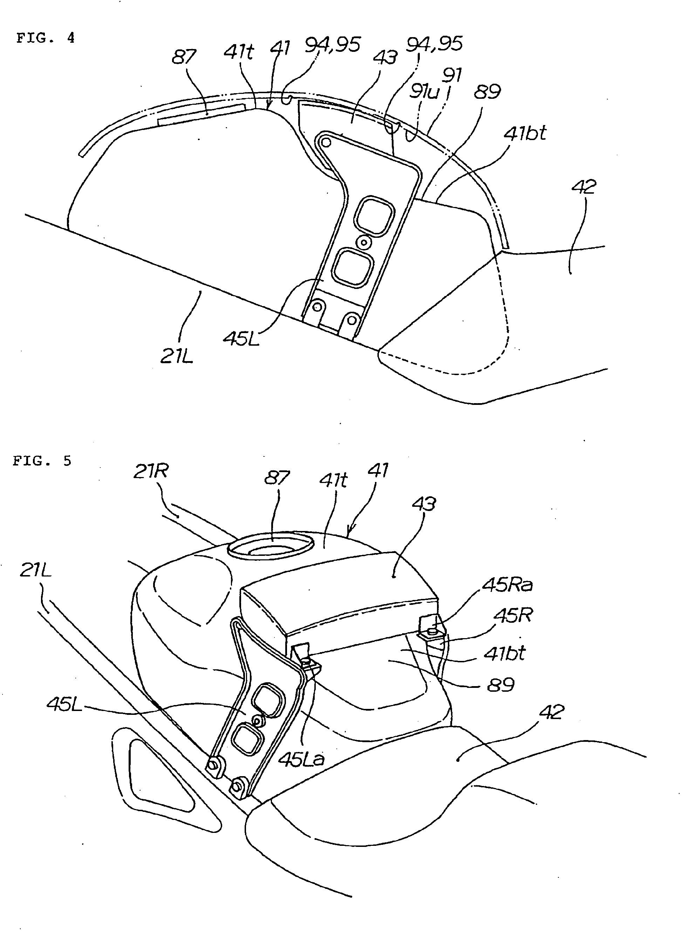

FIG. 4 is a side view of the air bag module disposed on the upper side of a rear part of the fuel tank and the surroundings of the air bag module, and FIG. 5 is a perspective view of the air bag module disposed on the upper side of the rear part of the fuel tank and the surroundings of the air bag module. In FIG. 5, a tank cover 91 is omitted. Now, description will be made below, referring to FIGS. 4 and 5 together.

The fuel tank 41 is disposed between the left and right main frames 21L, 21R, and are mounted to the main frames 21L, 21R. The fuel tank 41 is provided with a fuel tank feed port 87 at a front part thereof, and is provided with a recess 89 at a rear part upper surface 41bt thereof. The air bag module 43 is disposed in the recess 89.

More specifically, the air bag module 43 is mounted bridgingly between left and right upper end parts 45La, 45Ra of the stay parts 45L, 45R extending upwards from the left and right main frames 21L, 21R.

Since the recess 89 is provided at the rear part upper surface 41bt of the fuel tank 41 and the air bag module 43 is disposed in the recess 89, the air bag module 43 can be so disposed as not to project from the upper surface 41t of the fuel tank 41.

When the air bag module 43 can be so disposed as not to project from the upper surface 41t of the fuel tank 41, ruggedness in the upper surface 41t of the fuel tank 41 can be suppressed, the upper surface 41t of the fuel tank 41 can be rendered neat, and the appearance quality of the fuel tank 41 and the surroundings thereof can be restrained from being lowered.

In addition, with the air bag module 43 disposed in the recess 89 formed at the rear part upper surface of the fuel tank, the air bag at the time of inflation is inflated toward the rider, so that the air bag can be efficiently inflated without using any support belt.

In this embodiment, the fuel tank 41, the air bag module 43, and the stay members 45L, 45R are collectively covered with a tank cover 91. Therefore, the appearance quality of the fuel tank 41 and the surroundings can be enhanced largely, while permitting the air bag module 43 to be disposed in the vicinity of the rider.

Referring to FIG. 1 also, the seat frames 33L, 33R are provided respectively on the left and right sides, and the fuel sub-tank 44 is disposed between the left and right seat frames 33L, 33R as viewed from the upper side of the vehicle. Therefore, the reduction in the capacity of fuel due to the recess 89 provided in the fuel tank 41 can be compensated for by the fuel sub-tank 44. Specifically, the reduction in the capacity of the fuel tank 41 due to the air bag module 43 contained in the recess 89 and to the air cleaner 57 so disposed as to overlap with the fuel tank 41 in side view can be compensated for by the fuel sub-tank 44.

In addition, a fuel sub-tank 44 accompanied by a fuel supply system 55 is disposed between the seat frames 33L, 33R. Therefore, when the fuel sub-tank 44 and the fuel supply system 55 are disposed in the vicinity of the engine 22, it is possible to realize both a lowering of the center of gravity of the vehicle and concentration of mass. The lowering of the center of gravity and the concentration of mass promise further enhancement of the driveability of the vehicle.

A lower surface 91 u of the tank cover 91 is provided, at its portion facing the air bag module 43, with a fragile part 95 such as a notch part 94. The fragile part 95 is so designed that a portion on the side closer to the rider on the rear side in the front-rear direction of the vehicle is more fragile than a portion on the side remoter from the rider, whereby it is ensured that at the time of inflation of the air bag module 43, the air bag 97 can be inflated toward the rider's side.

Incidentally, while the fragile part 95 is the notch part 94 in this embodiment, the fragile part 95 may be a portion obtained by rendering the tank cover 91 thinner than the other portions.

The operation of the motorcycle equipped with the air bag module and the cowl stay as above-mentioned will be described below.

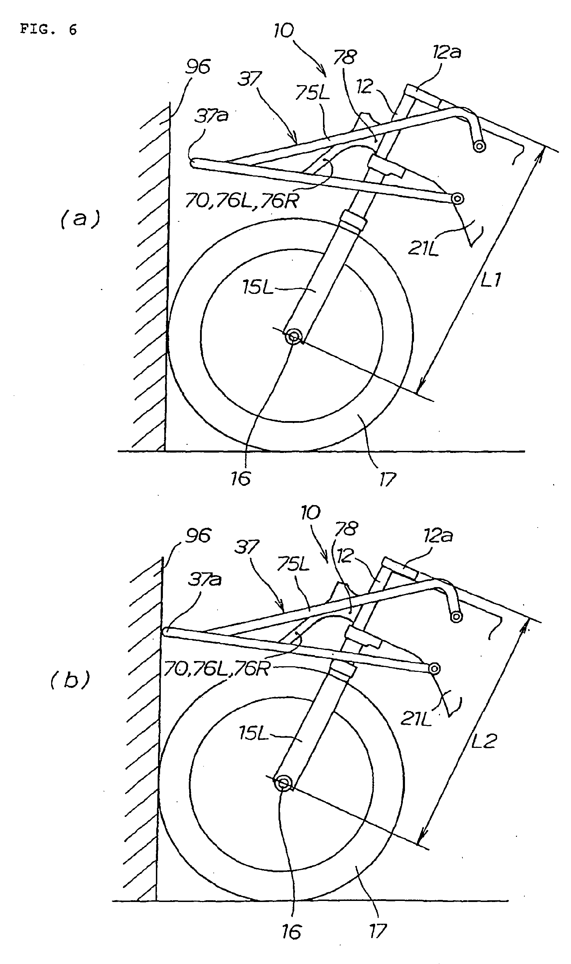

FIG. 6 illustrates the operation of the cowl stay.

(a) of FIG. 6 illustrates the collision of the front wheel 17 against an object 96, in the case where an excessively strong shock is exerted on the motorcycle 10, which serves as a vehicle, from the front side. In the figure, the distance between the front wheel axle 16 and the upper end part 12a of the head pipe 12 is L1.

In (b) of FIG. 6, upon collision of the vehicle against the object 96, for absorbing the shock, the front forks 15L, 15R shrinks, and the vehicle body inclusive of the main frames 21L, 21R falls along the axial direction of the front forks 15L, 15R. In the figure, the distance between the front wheel axle 16 and the upper end part 12a of the head pipe 12 is L2 (L2 < L1).

In the case where the motorcycle 10 receives an excessively strong impact force from the front side, the configuration in which the front forks 15L, 15R are disposed with their upper end portion inclined rearwards ensures that, upon receiving the shock, the main frames 21L, 21R fall along the axial direction of the front forks 15L, 15R and are moved forwards relative to the position of the front wheel 17, so that a front end part 37a of the cowl stay 37 collides against the object 96.

The cowl stay 37 itself is securely provided with strength, through provision of the reinforcing slant members 75L, 75R (only symbol 75L on the viewer's side of the drawing is shown) or the like. In addition, the cowl stay 37 is mounted to the main frames 21L, 21R and the head pipe 12 at the plurality of points 101L, 101R, 102L, 102R, so that a sufficient mounting strength is secured. Consequently, the cowl stay can function as a front bumper of the motorcycle 10.

In the case where the cowl stay 37 configured as above is disposed on the upper side of the front wheel 17 and an excessively strong shock is exerted from the front side, the shock upon the collision against the object 96 is received by two points including the front wheel 17 and the cowl stay 37. Therefore, the change in the attitude of the motorcycle 10 can be suppressed, as compared with the case where the shock is received by the front wheel 17 alone.

Now, the operation of the cowl stay 37 will be described below referring to FIG. 2 also.

The main stay parts 73L, 73R and the slant members 75L, 75R are mounted to the main frames 21 L, 21 R at the different points 101 L, 101 R, 102L, 102R. Therefore, when a shock is inputted to the main stay parts 73L, 73R from the front side, the slant members 75L, 75R support the main stay parts 73L, 73R so as to suppress bending of the main stay parts 73L, 73R. Since the input from the front side is received by the plurality of different points, the rigidity of the cowl stay 37 can be enhanced. With the rigidity of the cowl stay 37 enhanced, the change in the attitude of the vehicle can be suppressed more.

In addition, the slant member 75L, 75R are each formed in a roughly inverted V shape pointing to the upper side of the vehicle. Since the slant members 75L, 75R are each formed in the roughly inverted V shape, the main stay parts 73L, 73R are bent when an excessively strong shock is inputted from the front side. Since the slant members 75L, 75R are each formed in the roughly inverted V shape, they are liable to be bent in such a direction as to be projected upwards, at the vertex parts T, T of the roughly inverted V shape. In this case, the spacing Px between the main stay parts 73L, 73R and the slant members 75L, 75R is enlarged, so that the possibility of a change in the attitude of the vehicle is lowered. Besides, a shock-absorbing effect can be provided.

The cowl stay 37 has the center arm 78 and the arm parts connecting the center arm 78 to the main stay parts 73L, 73R, so that the rigidity of the cowl stay 37 can be enhanced further. Since the main stay parts 73L, 73R provided in the cowl stay 37 are supported by the center arm 78 and the lower arm parts 76L, 76R as the arm parts 70 as well as by the slant members, the possibility of concentration of a load on the slant members 75L, 75R can be lowered, as compared with the case where only the slant members 75L, 75R are provided. With the possibility of concentration of a load on the slant members 75L, 75R thus lowered, the slant members 75L, 75R can be rendered lighter in weight, and a reduction in the weight of the cowl stay as a whole can be realized.

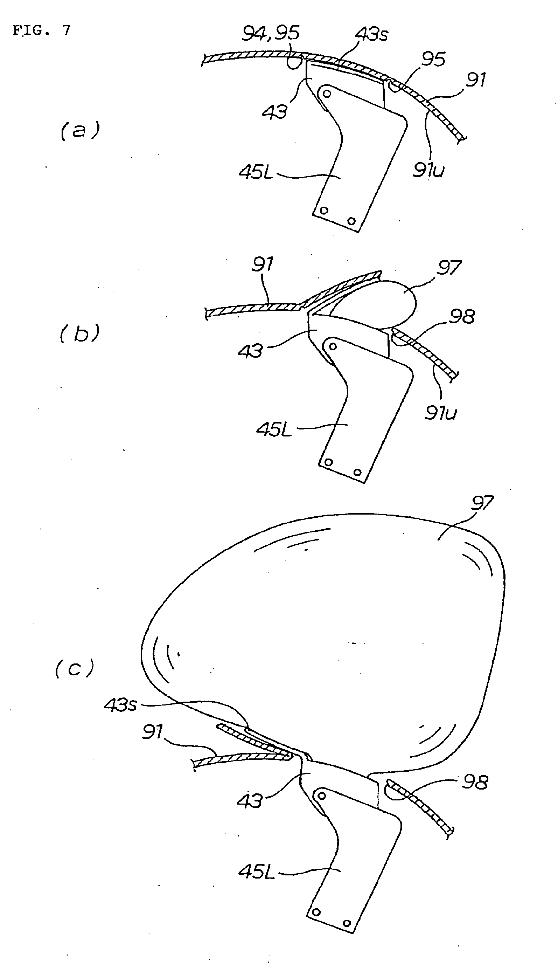

FIG. 7 illustrates the operation of the air bag module.
(a) of FIG. 7 is an illustration of the air bag module 43 in its non-operating state. The lower surface 91 u of the tank cover 91 is provided, at its portion fronting on the air bag module 43, with the fragile part 95 inclusive of the notch part 94 or the like. When the air bag module 43 is in its non-operating state, the air bag module 43 is covered with the tank cover 91, whereby the appearance quality of the vehicle can be maintained.
(b) of FIG. 7 is an illustration of the air bag module 43 immediately upon its operation. The lower surface 91 u of the tank cover 91 is provided, at its portion fronting on the air bag module 43, with the fragile part 95 inclusive of the notch part 94 or the like, and an upper surface part 43s of the air bag module 43 is configured to be openable while being provided with a front hinge mechanism. Therefore, when the air bag module 43 is operated, the upper surface part 43s is opened by expansion of the air bag 97, and an opening 98 is formed in the fragile part 95, whereby expansion and inflation of the air bag 97 can be permitted to occur smoothly.
(c) of FIG. 7 is an illustration of the condition where the air bag module 43 is operated and the air bag 97 incorporated in the air bag module 43 is put into expansion and inflation. The air bag 97 is inflated toward the upper side of the tank cover 91.

In this embodiment of the present invention, the recess 89 in which to dispose the air bag module 43 is formed in the rear part upper surface 41bt of the fuel tank 41. However, the position of the recess 89 may be any position, such as a front portion and an intermediate portion, of the upper surface of the fuel tank 41.

If the recess 89 can be disposed at an arbitrary position in the upper surface 41t of the fuel tank 41, the air bag 97 can be disposed at such a position that the air bag 97 can be operated more effectively in relation to the rider, according to the size of the air bag 97 or the like factors.

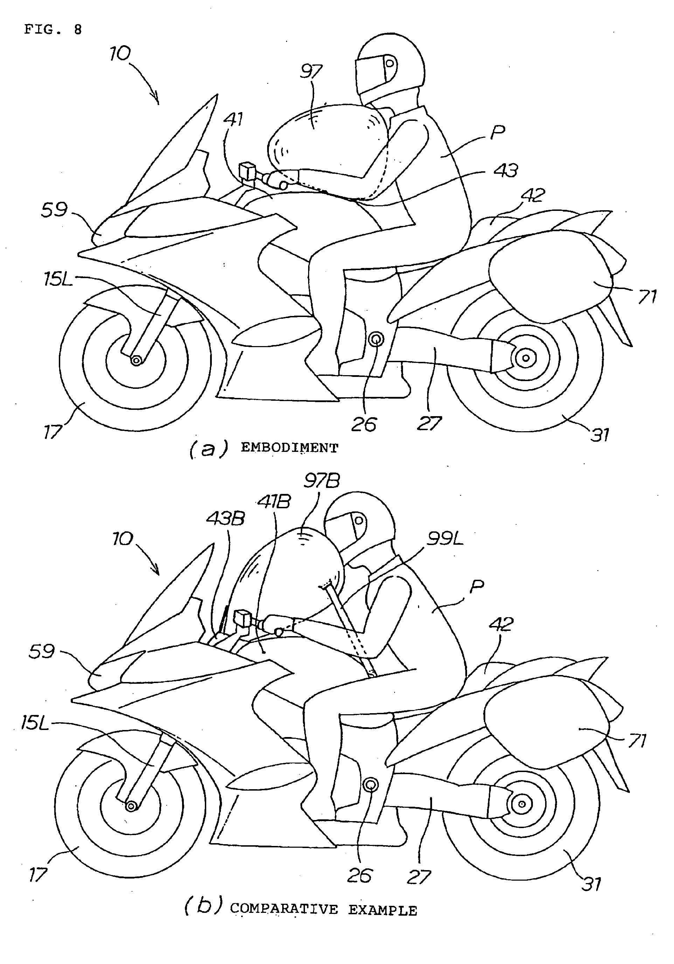

FIG. 8 shows an illustration of the operation of the air bag module provided in the motorcycle according to the present invention and an illustration of a comparative example.
(a) of FIG. 8 shows an embodiment of the present invention, illustrating that the air bag 97 disposed at the rear part upper surface of the fuel tank 41 is inflated to come into contact with the rider P.
   Since the air bag module 43 is disposed on the upper side of a rear part of the fuel tank 41, the air bag module 43 can be disposed to be closer to the rider, as compared with the case where the air bag module 43 is disposed on the front side of the fuel tank 41.
(b) of FIG. 8 shows a comparative example, illustrating that an air bag 97B disposed on the front side of a fuel tank 41 B is inflated to come into contact with the rider P. In this example, the air bag module 43 cannot be disposed close to the rider.

From this point of view, in (a) of FIG. 8, when the air bag 97 is inflated, the inflated air bag 97 can be inflated at a predetermined position, without using any support belts 99L, 99R (only 99L on the viewer's side of the drawing is shown) for supporting the inflated air bag 97 at the predetermined position.

In addition, the fuel tank 41 is disposed between the air bag module 43 and the rider seat 42. On the other hand, in (a) of FIG. 8, the air bag module 43 is disposed at the rear part upper surface 41bt of the fuel tank 41, whereby the air bag module 43 is disposed closer to the rider seat 42 on which to seat the rider(s). Therefore, the time from the moment of inflation of the air bag 97 to the moment of contact of the inflated air bag 97 with the rider can be shortened, as compared with the case where the air bag module 43 is disposed on the front side of the fuel tank 41.

Referring to FIG. 6 also, the motorcycle 10 is provided with the cowl stay 37, and the air bag 97 is mounted thereto. The provision of the cowl stay 37 ensures that, when the motorcycle 10 equipped with the air bag 97 receives an excessively strong shock from the front side, the change in the attitude of the motorcycle 10 is suppressed. With the change in the posture of the motorcycle 10 thus suppressed, the possibility of changes in the riding position and posture of the rider P is lowered. Consequently, when the air bag 97 is inflated, the positional accuracy in contact of the inflated air bag 97 with the rider P can be enhanced more, the air bag 97 is permitted to acts on the rider P more effectively, and the rider P can be protected more effectively.

Incidentally, while the motorcycle having both the cowl stay and the air bag module has been described in this embodiment, either one of the cowl stay and the air bag module may be omitted.

In the case where a motorcycle is provided with a cowl stay, the cowl stay 37 is disposed at a height above the center-of-gravity position (refer to symbol G in FIG. 1) of the vehicle, so that the change in the attitude of the motorcycle 10 upon a head-on collision of the vehicle can be reduced more, as compared with the case where the cowl stay is disposed below or at the same level as the center-of-gravity position G of the vehicle.

The present invention is directed to provide a motorcycle having a technology which substitutes for support belt for holding an air bag in the position where the air bag is inflated.

A motorcycle 10 includes: main frames 21L, 21R extending to the rear left and right sides from a head pipe 12; a fuel tank 41 provided between the main frames 21L, 21R; seat frames 33L, 33R extending rearwards from the main frames 21L, 21R; a rider seat 42 supported by the seat frames 33L, 33R; and an air bag module 43 provided on the front side of the rider seat 42, wherein the air bag module 43 is disposed on the upper side of a rear part of the fuel tank 41, and is mounted to stay members 45L, 45R extending upwards from the left and right main frames 21L, 21R.

## Claims

1. A motorcycle (10) comprising a head pipe (12), main frames (21L, 21 R) extending toward the rear left and right sides from said head pipe (12), a fuel tank (41) provided between said left and right main frames (21L, 21R), seat frames (33L, 33R) extending rearwards from rear end parts of said main frames (21Lb, 21Rb), a rider seat (42) which is supported by said seat frames (33L, 33R) and on which a rider or riders can sit, and an air bag module (43) provided on the front side of said rider seat (42),
wherein said air bag module (43) is disposed on the upper side of a rear part of said fuel tank (41b), and
wherein said seat frames (33L, 33R) are provided respectively on the left and right sides,
**characterized in that**
said air bag module (43) is mounted to left and right stay members (45L, 45R) extending upwards from said left and right main frames (21L, 21R), and is mounted bridgingly between said left and right stay members (45L, 45R),
wherein a fuel sub-tank (44) is disposed between said left and right seat frames (33L, 33R) as viewed from the upper side of the vehicle, said fuel sub-tank (44) is provided with a fuel pump (54) for feeding out a fuel to the engine side, said fuel tank (41) and said fuel sub-tank (44) are connected to each other with a pipe (53) through which said fuel can pass, and said fuel pump (54) is configured to supply said fuel from said fuel sub-tank (44) to said engine (22).

2. The motorcycle (10) as set forth in claim 1, wherein a rear part upper surface of said fuel tank (41bt) is provided with a recess (89), and said air bag module (43) is disposed in said recess (89).

3. The motorcycle (10) as set forth in claim 1 or 2, wherein said fuel tank (41), said air bag module (43), and said stay members (45L, 45R) are covered collectively with a tank cover (91).

4. The motorcycle (10) as set forth in claim 3, wherein said tank cover (91) is provided, at its portion facing said air bag module (43), with a fragile part (95) inclusive of a notch part (94).

## Patentansprüche

1. Kraftrad (10), umfassend ein Kopfrohr (12), Hauptrahmen (21L, 21R), welche sich von dem Kopfrohr (12) aus zu der hinteren linken und rechten Seite erstrecken, einen Kraftstofftank (41), welcher zwischen den linken und rechten Hauptrahmen (21L, 21R) vorgesehen ist, Sitzrahmen (33L, 33R), welche sich von hinteren Endteilen von den Hauptrahmen (21Lb, 21Rb) aus nach hinten erstrecken, einen Fahrersitz (42), welcher durch die Sitzrahmen (33L, 33R) gelagert ist und auf dem ein oder mehrere Fahrer sitzen können, und ein Airbagmodul (43), welches auf der Vorderseite von dem Fahrersitz (42) vorgesehen ist,
wobei das Airbagmodul (43) auf der Oberseite von einem hinteren Teil des Kraftstofftanks (41b) angeordnet ist, und
wobei die Sitzrahmen (33L, 33R) jeweils auf der linken und der rechten Seite vorgesehen sind,
**dadurch gekennzeichnet,**
**dass** das Airbagmodul (43) an linken und rechten Stützelementen (45L, 45R) angebracht ist, welche sich von den linken und rechten Hauptrahmen (21L, 21R) aus nach oben erstrecken, und überbrückend zwischen den linken und rechten Stützelementen (45L, 45R) angebracht ist,
wobei ein Kraftstoffnebentank (44), von der Oberseite des Fahrzeugs aus gesehen, zwischen den linken und rechten Sitzrahmen (33L, 33R) angeordnet ist, der Kraftstoffnebentank (44) mit einer Kraftstoffpumpe (54) versehen ist, um Kraftstoff zur Motorseite heraus zu fördern, der Kraftstofftank (41) und der Kraftstoffnebentank (44) miteinander durch ein Rohr (53) verbunden sind, durch welches der Kraftstoff passieren kann, und die Kraftstoffpumpe (54) dazu ausgebildet ist, den Kraftstoff von dem Kraftstoffnebentank (44) dem Motor (22) zuzuführen.

2. Kraftrad (10) nach Anspruch 1, wobei eine obere Fläche eines hinteren Teils des Kraftstofftanks (41bt) mit einer Ausnehmung (89) versehen ist und das Airbagmodul (43) in der Ausnehmung (89) angeordnet ist.

3. Kraftrad (10) nach Anspruch 1 oder 2, wobei der Kraftstofftank (41), das Airbagmodul (43) und die Stützelemente (45L, 45R) gemeinsam mit einer Tankabdeckung (91) abgedeckt sind.

4. Kraftrad (10) nach Anspruch 3, wobei die Tankabdeckung (91) an ihrem zu dem Airbagmodul (43) weisenden Abschnitt mit einem zerbrechlichen Teil (95) einschließlich eines Aussparungsteils (94) versehen ist.

## Revendications

1. Motocyclette (10) comprenant un tube de direction (12), des cadres principaux (21L, 21R) s'étendant vers les côtés arrière gauche et droit depuis ledit tube de direction (12), un réservoir à carburant (41) prévu entre lesdits cadres principaux gauche et droit (21L, 21R), des cadres formant siège (33L, 33R) s'étendant vers l'arrière depuis des parties d'extrémité arrière desdits cadres principaux (21Lb, 21Rb), un siège de conducteur (42) qui est supporté par lesdits cadres formant siège (33L, 33R) et sur lequel un conducteur ou un conducteur et un passager peuvent s'asseoir et un module formant coussin de sécurité gonflable (43) prévu sur le côté avant dudit siège de conducteur (42), dans laquelle ledit coussin de sécurité gonflable (43) est disposé sur le côté supérieur d'une partie arrière dudit réservoir à carburant (41b), et dans laquelle lesdits cadres formant siège (33L, 33R) sont prévus respectivement sur les côtés gauche et droit, **caractérisée en ce que** ledit module formant coussin de sécurité gonflable (43) est monté sur des éléments formant supports gauche et droit (45L, 45R) s'étendant vers le haut depuis lesdits cadres principaux gauche et droit (21L, 21R), et est monté en établissant un pont entre lesdits éléments formant supports gauche et droit (45L, 45R), dans laquelle un sous-réservoir à carburant (44) est disposé entre lesdits cadres formant siège gauche et droit (33L, 33R) vus depuis le côté supérieur du véhicule, ledit sous-réservoir à carburant (44) est doté d'une pompe à carburant (54) pour amener un carburant au côté du moteur, ledit réservoir à carburant (41) et ledit sous-réservoir à carburant (44) sont raccordés l'un à l'autre par un tuyau (53) au travers duquel ledit carburant peut passer, et ladite pompe à carburant (54) est configurée pour fournir ledit carburant dudit sous-réservoir à carburant (44) audit moteur (22).

2. Motocyclette (10) selon la revendication 1, dans lequel une surface supérieure d'une partie arrière dudit réservoir à carburant (41bt) est dotée d'un évidement (89) et ledit module formant coussin de sécurité gonflable (43) est disposé dans ledit évidemment (89).

3. Motocyclette (10) selon la revendication 1 ou 2, dans lequel ledit réservoir à carburant (41), ledit module formant coussin de sécurité gonflable (43), et lesdits éléments formant supports (45L, 45R) sont recouverts collectivement par un couvercle de réservoir (91).

4. Motocyclette (10) selon la revendication 3, dans lequel ledit couvercle de réservoir (91) est doté, sur sa portion faisant face audit module formant coussin de sécurité gonflable (43) d'une partie facile à détacher (95) comprenant une partie formant encoche (94).
